# EUROPÄISCHE PATENTSCHRIFT

(11) **EP 2 710 794 B1**
(45) Veröffentlichungstag und Bekanntmachung des Hinweises auf die Patenterteilung: **30.11.2016**
(21) Anmeldenummer: 12721532.5
(22) Anmeldetag: 16.05.2012
(51) Int. Cl.: H04N 5/232, H04N 5/235, G01B 5/004, G01B 21/04

(54) **VERFAHREN ZUR ERZEUGUNG UND AUSWERTUNG EINES BILDS**
METHOD FOR GENERATING AND EVALUATING AN IMAGE
PROCÉDÉ POUR PRODUIRE ET ÉVALUER UNE IMAGE

(30) Priorität: 17.05.2011 DE 102011050408; 18.07.2011 DE 102011051894; 21.12.2011 DE 102011056788
(43) Veröffentlichungstag der Anmeldung: 26.03.2014
(60) Teilanmeldung: 16191820.6
(73) Patentinhaber: Werth Messtechnik GmbH, 35394 Giessen (DE)
(72) Erfinder: CHRISTOPH, Ralf, 35394 Gießen (DE); SCHMIDT, Ingomar, 35418 Buseck (DE); WINCK, Peter, 35745 Herborn (DE)
(74) Vertreter: Stoffregen, Hans-Herbert
(86) Internationale Anmeldenummer: PCT/EP2012/059157
(87) Internationale Veröffentlichungsnummer: WO 2012/156462

(56) Entgegenhaltungen:
- EP-A1- 2 242 021
- EP-B1- 1 286 134
- DE-A1- 10 248 779
- DE-A1-102005 058 353
- DE-A1-102009 043 823
- US-A1- 2004 252 884
- US-A1- 2008 146 931
- US-A1- 2009 009 614
- US-A1- 2010 085 422
- US-A1- 2011 102 542
- US-B1- 6 720 997
- US-B1- 6 813 391
- Richard Szeliski: "Image Alignment and Stitching: A Tutorial", , 10. Dezember 2006 (2006-12-10), XP002680820, Gefunden im Internet: URL:http://research.microsoft.com/pubs/700 92/tr-2004-92.pdf [gefunden am 2012-07-25]

## Beschreibung

Die Erfindung bezieht sich auf ein Verfahren zur Erzeugung und Auswertung eines Bildes von zumindest einem Abschnitt eines Messobjekts in einem Koordinatenmessgerät mit einer mehrere Pixel enthaltenden Kamera, insbesondere CCD- oder CMOS-Kamera, wobei das Koordinatenmessgerät eingesetzt wird, das Mittel zur Relativbewegung zwischen dem Messobjekt und der Kamera zur Verfügung stellt und in das die Kamera integriert ist.

Um rauscharme und kontrastreiche Bilder, zum Beispiel zur Bildverarbeitung oder zu Autofokusmessungen in der Koordinatenmesstechnik, aber auch anderen Technikbereichen zur Verfügung zu stellen, ist es notwendig, entsprechende Integrationszeiten an den Kameras einzustellen. An den erzeugten Aufnahmen werden in der Koordinatenmesstechnik beispielsweise Konturen bzw. Konturpunkte ermittelt. Damit dies mit höchster Genauigkeit erfolgen kann, sind möglichst scharfe Abbildungen zu bevorzugen. Dies setzt jedoch voraus, dass während der Integrationszeit der Kamera das Objekt und die Kamera nicht zueinander verschoben werden. Ansonsten treten Verschmierungseffekte auf, die die Genauigkeit bei der Konturlagenbestimmung beeinträchtigen.

Um diese Problematik zu umgehen, sind im Stand der Technik Verfahren bekannt, bei denen besonders kurze Integrationszeiten für die Kameras gewählt werden. Problematisch ist hierbei jedoch, dass die Bilder sehr dunkel und damit verrauscht sind. Um zu versuchen, diese Nachteile zu umgehen, können Lichtquellen kurzzeitig über ihre Dauerbelastung hinaus im Blitzbetrieb angesteuert werden.

Dadurch ist eine höhere Helligkeit erreichbar. Bei besonders schnellen Bewegungen und dunklen Szenen ist dies aber oftmals nicht ausreichend und die Bilder sind entweder zu dunkel und damit verrauscht oder es muss so lang integriert werden, dass die Bildunschärfe zu Messabweichungen führt.

Der US 2009/009614 A1 ist eine Digitalkamera zu entnehmen, bei der eine Korrelation zwischen einzelnen aufgenommenen Bildern erfolgt.

Um ein Panoramabild zu erzeugen, werden nach der US 2010/085422 A1 in verschiedenen Drehstellungen einer Kamera Bilder aufgenommen, die mittels Korrelation aneinandergereiht werden.

Bekannte Verfahren zum Ausrichten bzw. Registrieren von Bildern sind der Veröffentlichung Richard Szeliski: "Image Alignment and Stitching: A Tutorial", 10. Dezember 2006 (2006-12-10), XP002680820, zu entnehmen.

Ein Verfahren zum Zusammensetzen von Einzelbildern zu einem Gesamtbild ist aus der US 6 813 391 B1 bekannt.

Nach der US 6 720 997 B1 werden mittels einer elektronischen Kamera in einem ersten Modus ein Gesamtbild eines Bereichs eines Objektes und in einem zweiten Modus Teilbilder ermittelt, die sodann mittels einer Bildverarbeitung zusammengesetzt werden, die dem ersten Bild entsprechen.

Ein Bilderkennungssystem, wie der Erkennung eines Barcodes, ist der US 2011/0102542 A1 zu entnehmen. Dabei erfolgt ein Registrieren mehrerer Bilder.

Aus der DE 10 2005 058 353 A1 ist ein Verfahren zur Aufnahme digitaler Abbildungen bekannt. Ein aufzunehmender Gegenstand wird auf einer Drehscheibe angeordnet, um sodann mittels einer Digitalkamera Abbildungen in verschiedenen Drehstellungen aufzunehmen.

Ein Verfahren und eine Anordnung zur Durchführung von zweidimensionalen Messungen an bewegten Meßobjekten sind in der DE 102 48 779 A1 beschrieben.

Zur Erfassung der Geometrien großer Werkstücke wird nach der EP 1 286 134 B1 das Werkstück in verschiedenen Positionen bei blitzartiger Belichtung aufgenommen.

Nach der EP 2 242 021 A1 kann eine Langzeitaufnahme durch eine Sequenz von Kurzzeitaufnahmen zu geringfügig unterschiedlichen Zeiten simuliert werden.

Der vorliegenden Erfindung liegt die Aufgabe zugrunde, ein Verfahren der eingangs genannten Art so weiterzubilden, dass die Nachteile des Stands der Technik vermieden werden, insbesondere ein helles Bild erzeugt wird, das Unschärfen nicht oder nicht in einem Umfang aufweist, dass Messverfälschungen auftreten, insbesondere auch dann, wenn eine Relativbewegung zwischen der Kamera und dem Objekt bzw. des aufzunehmenden Abschnitts erfolgt.

Zur Lösung der Aufgabe wird vorgeschlagen, dass von dem zumindest einen Abschnitt Einzelbilder mit der Kamera in Lageabweichung zueinander derart aufgenommen werden, dass zumindest einige Einzelbilder sich jeweils derart teilweise überlappen, dass zur Erzeugung des Bilds die Einzelbilder oder Signale dieser in Bezug auf den zumindest einen Abschnitt zueinander ausgerichtet und zu einem Gesamtbild als das Bild des zumindest einen Abschnitts überlagert werden, das größer als ein Einzelbild ist, wobei räumliche Lage der Einzelaufnahmen zueinander unter Zuhilfenahme der zu jeder Einzelaufnahme bestimmten Kameraposition ermittelt wird, und die Relativpositionen zwischen Messobjekt und Kamera aus den Achspositionen des Koordinatenmessgerätes bestimmt werden und die Einzelbilder unter Berücksichtigung dieser Relativpositionen zueinander verschoben und zu dem Gesamtbild überlagert werden, dass die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt, dass die Grauwerte der überlappenden Bereiche zur Bildung des Gesamtbildes addiert werden, und dass aus dem Bild Objektpunkte und/oder Konturen und/oder Maße des Messobjektes bestimmt werden.

Aufgrund der erfindungsgemäßen Lehre wird eine Positionsveränderung zwischen dem optischen Sensor - nachstehend nicht schutzeinschränkend auch als Kamera bezeichnet - und dem zumindest einen Abschnitt des Objekts während der Aufnahmen der Einzelbilder berücksichtigt, so dass ein helles, Bewegungsunschärfen nicht aufweisendes Bild zur Verfügung steht.

Die Erfindung bezieht sich somit auf ein Verfahren zur Bilderzeugung mit einer Kamera, wobei aus mehreren Einzelbildern grundsätzlich durch Überlagerung unter Berücksichtigung des Lageversatzes zwischen den Einzelaufnahmen ein Gesamtbild erzeugt wird.

Insbesondere werden die Intensitäten mehrerer Einzelaufnahmen überlagert, um ein helleres Gesamtbild zu erzeugen. Da physikalisch bedingt zwischen zwei Einzelaufnahmen immer eine leichte Positionsverschiebung zwischen Kamera und aufgenommenen Messobjektbereich vorliegt, muss diese Lageverschiebung korrigiert werden.

Dies erfolgt erfindungsgemäß dadurch, dass zu jeder Einzelaufnahme die Position gemessen wird.

Im nächsten Schritt werden die Einzelaufnahmen entsprechend ihrer Lageabweichung zueinander auf eine gemeinsame Position und vorzugsweise in ein gemeinsames Pixelraster verschoben. Anschließend erfolgt die Überlagerung der Grauwertamplituden zur Bildung eines überlagerten Bildes. Diesem Bild wird zumindestens in den lateralen Richtungen die Messposition des gewählten Pixelrasters zugewiesen. In der verbleibenden dritten Raumrichtung senkrecht zur Bildebene wird vorzugsweise eine Mittelung der Position der überlagerten Einzelaufnahmen zugeordnet.

Dies bedeutet, dass ein Mittelwert aus den Abstandswerten zur Bildebene berechnet wird. Liegt die Bildebene in der x-y-Ebene wird infolgedessen der dem Bild- bzw. Gesamtbild zuzuordnende Z-Wert durch Mittelung der Einzel-Z-Werte der Einzelbilder berechnet.

Erfindungsgemäß wird aus Einzelbildern ein Summenbild erzeugt, dass die erforderliche Helligkeit aufweist, ohne dass Bewegungsunschärfen auftreten, so dass der zumindest eine Abschnitt des Objekts ausgewertet und damit gemessen werden kann.

Es werden die Einzelbilder - auch als Teilbilder bezeichnet - in Bezug auf den in diesen vorhandenen selben Abschnitt des Objekts zueinander ausgerichtet, um ein Summenbild zu erzeugen, das das Gesamtbild und somit das zu erzeugende Bild ist.

Das Merkmal, dass von zumindest einem Abschnitt eines zu messenden Objekts Einzelbilder aufgenommen werden, schließt selbstverständlich nicht aus, dass das gesamte Objekt erfasst wird.

Die Erfindung bezieht sich auf ein Verfahren zur Bilderzeugung mit einem optischen Sensor wie einer Kamera, bei dem mehrere Einzelaufnahmen überlagert werden, die im Wesentlichen den gleichen Abschnitt eines Objektes enthalten, also sich größtenteils überlagernde Objektabschnitte enthalten, wobei die räumliche Lage der Einzelaufnahmen zueinander berücksichtigt wird.

Es erfolgt ein Korrelieren der Grauwerte derart, dass der größte Summenwert gebildet wird. Dieser repräsentiert die größte Übereinstimmung der Einzelbilder in Bezug auf den zumindest einen Abschnitt, der durch scheinbares seitliches, also laterales Verschieben der zu überlagernden Einzelbilder erzielbar ist.

Die Erfindung zeichnet sich dadurch aus, dass die Überlagerung durch Addition der Intensitäten beziehungsweise Grauwerte der Pixel der Einzelaufnahmen erfolgt.

Dabei kann vorgesehen sein, dass vor der Überlagerung der räumliche Lageversatz zwischen den Einzelaufnahmen durch Verschiebung und / oder Drehung, zumindest in der Bildebene der Einzelaufnahmen, korrigiert wird.

Die Erfindung zeichnet sich auch dadurch aus, dass das aus den Einzelaufnahmen erzeugte Bild nur die überlappenden Bildabschnitte enthält, die in allen Einzelaufnahmen vorhanden sind.

Die Erfindung sieht auch vor, dass zur Auswertung des Gesamtbildes zumindest ein überlappungsfreier Bereich eines oder mehrerer Einzelbilder berücksichtigt wird und dass zur Auswertung des überlappungsfreien Bereichs dessen Grauwert auf den Grauwert von auszuwertendem Überlappungsbereich von Einzelbildern normiert wird.

Ganz allgemein zeichnet sich die Erfindung auch dadurch aus, dass die Grauwerte auszuwertender Bereiche normiert werden, insbesondere auf einen Grauwert normiert werden, der dem eines Bereichs mit maximaler Überlappung entspricht.

Die Erfindung wird jedoch auch dann nicht verlassen, wenn einzelne Bereiche von der Auswertung ausgeschlossen werden.

Aus der Gesamtheit aller endgültig berücksichtigten Einzelbilder wird ein Gesamtbild zusammengesetzt. An diesem Gesamtbild können Auswertungen mit Hilfe von Bildverarbeitungsalgorithmen erfolgen, wie beispielsweise Bestimmung von Kanten oder Abständen von Kanten oder geometrischen Merkmalen.

Bevorzugterweise ist vorgesehen, dass der Überlappungsbereich der Abschnitte kleiner als 100 % beträgt, insbesondere zwischen 100 % und 10 %, vorzugsweise zwischen 100 % und 50 % liegt.

Erfindungsgemäß ist vorgesehen, dass der Überlappungsbereich der aufgenommenen Einzelbilder vorzugsweise weniger als 100 % des jeweiligen Einzelbilds beträgt.

In einem bevorzugten Verfahren beträgt die Überlappung ca. 50 %, wodurch für jeden Bereich eine Überlagerung von jeweils zwei Einzelbildern erfolgen kann. Alternativ kann die Überlappung auch größer sein, beispielsweise zwischen 60 % und 90 %. Hierdurch werden je Bereich mehr als zwei Bilder überlagert, wodurch eine noch höhere Helligkeit und damit ein geringeres Rauschen erreicht werden kann. Damit werden noch geringere Integrationszeiten der Kamera möglich. Bei der Überlagerung bzw. Mittelwertbildung wird dann die Anzahl der überlagerten Bilder berücksichtigt, indem eine entsprechende Skalierung erfolgt. Beträgt der Überlappungsbereich weniger als 50 %, so entstehen Bereiche, bei denen überlagerte Bilder zur Verfügung stehen und Bereiche, bei denen dies nicht der Fall ist. In Bereichen, für die keine überlagerten Bilder zur Verfügung stehen, wird die Helligkeit durch Skalierung bzw. Wichtung der Grauwerte angepasst auf die Helligkeit der überlagerten Bilder.

Die Erfindung zeichnet sich auch dadurch aus, dass die Größe des Gesamtbildes größer als die Größe eines Einzelbildes ist.

Besonders hervorzuheben ist des Weiteren, dass die Einzelbilder in verschiedenen Drehstellungen des Objektes aufgenommen werden können. Somit werden nach einem selbständigen Lösungsvorschlag die Einzelbilder in verschiedenen Drehstellungen eines Messobjektes aufgenommen. Hierdurch ist es möglich, verschiedene Teilbereiche des Messobjektes aufzunehmen, die sich z. B. auf der Mantelfläche eines rotationssymmetrischen Bauteils befinden. Eine Kombination mit einer lateralen Bewegung des Messobjekts zur Erstellung eines in mehreren Dimensionen vergrößerten Gesamtbildes im Vergleich zu den Einzelbildern ist ebenso möglich.

Auch zeichnet sich die Erfindung dadurch aus, dass wahlweise gesamte Fläche oder ein Teilbereich oder mehrere Teilbereiche der Detektionsfläche der Kamera genutzt werden, vorzugsweise eine eingeschränkte Anzahl von Zeilen.

Es wird die Bildwiederholrate im Vergleich zum Stand der Technik dadurch deutlich gesteigert, dass nur Teile der zur Verfügung stehenden Zeilen und/oder Spalten einer matrixförmigen Detektionsfläche wie Kamera zur Auswertung verwendet werden.

Hierbei lassen sich beispielsweise Bildwiederholraten von ca. 300 - 400 Hz realisieren. Insbesondere an gekrümmten Flächen werden durch Reduzierung der Zeilen oder Spalten nur die Bereiche ausgewertet, welche im Schärfentiefenbereich der verwendeten Abbildungsoptik angeordnet sind.

Die Auswahl der entsprechenden Bereiche kann entweder manuell, durch fest vordefinierte Angabe eines Messfensters, z. B. in einem Vorablauf bzw. im Rahmen der Erstellung eines Messprogramms, erfolgen und/oder automatisch während des Ablaufs des Messprogramms durch Auswertung des Kontrastes der aufgenommenen Bilder und Auswahl der Zeilen, die einen vordefinierten Grenzwert des Kontrastes überschreiten.

Insbesondere ist vorgesehen, dass die Teilbereiche jeweils durch eine eingeschränkte Anzahl von Zeilen und/oder Spalten der matrixförmigen Detektionsfläche festgelegt bzw. bestimmt werden.

Die erfindungsgemäße Lehre ermöglicht, dass bei der Aufzeichnung und/oder Verarbeitung der Messwerte von lediglich Teilbereichen der fotosensitiven Detektionsfläche eine erhöhte Messfrequenz verwendet wird.

Zur Definition der auszuwertenden Teilbereiche vor der eigentlichen Messung eignet sich insbesondere die Definition fest vorgegebener Fenster. Diese können beispielsweise im Rahmen der Messprogrammerstellung festgelegt werden. Hierbei kann der Bediener entweder manuell oder unter Zuhilfenahme von Auswerte-Tools den Bereich des Messfensters definieren, welcher die zu messenden Teilbereiche oder die Bereiche scharfer Abbildungen enthält. Eine Veränderung der auszuwertenden Teilbereiche während des Messablaufes, insbesondere in Echtzeit, kann durch Bestimmung des Kontrastes über das gesamte Bild erfolgen. Die Bestimmung der Kontrastwerte der einzelnen Pixel des Bildes kann dabei entweder direkt in dem Sensor - erwähntermaßen vereinfacht und ohne Einschränkung der erfindungsgemäßen Lehre auch als Kamera bezeichnet -, also ohne Übermittlung des Bildes an einen Host-Rechner, oder direkt in der Bildverarbeitungssoftware des Host-Rechners erfolgen. Insbesondere bei Auswertung des Kontrastes im Host-Rechner werden nicht alle, sondern nur einzelne ausgewählte Bilder von der Kamera komplett übermittelt und ausgewertet, um eine möglichst hohe Messfrequenz zu erlauben. Hierbei wird davon ausgegangen, dass sich die Kontrastwerte innerhalb des Bildes deutlich langsamer als die Wiederholfrequenz der Kamera ändern.

Bevorzugterweise ist vorgesehen, dass durch Umschaltung der auszuwertenden Teilbereiche eine Anpassung auf den Bereich des Messobjektes erfolgt, der sich im Schärfentiefenbereich der verwendeten Abbildungsoptik befindet.

Die Erfindung sieht insbesondere vor, dass die räumliche Lage der Einzelaufnahmen zueinander unter Zuhilfenahme der Drehlage des Bauteils ermittelt wird und vorzugsweise die Einzelbilder aufgrund der Krümmung des Objektes entzerrt werden. Bei der Aufnahme von Einzelaufnahmen in unterschiedlichen Drehlagen des Bauteiles werden die Einzelbilder aufgrund der Krümmung des Messobjektes verzerrt. In einem eigenständigen erfinderischen Gedanken wird diese Krümmung der Einzelbilder entzerrt. Unter Zuhilfenahme des bekannten oder nahezu bekannten z. B. vorab eingegebenen Krümmungsradius der Bauteiloberfläche werden die Bereiche im Bild entsprechend der vorliegenden Krümmung entzerrt, in dem die laterale Position der aufgenommenen Pixelinformationen verschoben wird. Dieses im Stand der Technik auch bekannte Abwickeln einer rotationssymmetrischen Mantelfläche führt nach der Entzerrung zunächst zu einem nicht äquidistanten Pixelraster. Dies wird durch Resampling auf ein äquidistantes Pixelraster zur weiteren Auswertung umgerechnet.

Kennzeichnend für die Erfindung kann ist des Weiteren sein, dass die Überlagerung durch Mittelung der Intensitäten bzw. Grauwerte der positionsmäßig einander entsprechenden Pixel der Einzelaufnahme erfolgt und vorzugsweise die sich ergebenden Grauwerte gespreizt werden, vorzugsweise durch Division, vorzugsweise mit einem Faktor, welcher der maximal für ein Pixel zur Überlagerung herangezogenen Anzahl von Grauwerten im Gesamtbild entspricht.

Durch diese Maßnahmen erfolgt eine Anpassung des auszuwertenden Grauwertbereichs auf einen gemeinsamen Maximalgrauwert.

Es zeichnet sich die Erfindung insbesondere auch dadurch aus, dass die Bereiche im Gesamtbild unberücksichtigt bleiben, die nach der Überlagerung einen Grauwert unterhalb eines Schwellwertes besitzen, wobei der Schwellwert vorzugsweise 20 %, besonders bevorzugte 10 % des maximalen Grauwertes beträgt.

Bereiche im Gesamtbild, deren Grauwert auch nach der Überlagerung bzw. aufgrund dessen, dass keine Überlagerung stattgefunden hat, unterhalb eines Schwellwertes liegt, welcher beispielsweise 20 % oder besonders bevorzugt 10 % des maximalen Grauwertes beträgt, werden bei der Ermittlung des Gesamtbildes nicht berücksichtigt. Hierdurch werden Bereiche von der Auswertung ausgeschlossen, die ein zu niedriges Signal-Rausch-Verhältnis besitzen.

Besonders hervorzuheben ist des Weiteren, dass bei der Überlagerung eine Wichtung der Bereiche erfolgt, in denen zumindest eines der für die Überlagerung herangezogenen Einzelbilder im Randbereich vorliegt.

Bei der Überlagerung erfolgt eine Wichtung der Bereiche, in denen zumindest eines der für die Überlagerung herangezogenen Einzelbilder im Randberiech vorliegt. Dies ist immer dann der Fall, wenn die Überlagerung weniger als 50 % beträgt. Hierbei entstehen im zusammengesetzten überlagerten Bild Bereiche, bei denen eine Überlagerung erfolgen kann, nämlich die Randbereiche der Einzelbilder. In den mittleren Bereichen der Einzelaufnahmen liegt dagegen keine Überlagerung vor. Entsprechend der Anzahl der zur Überlagerung herangezogenen Bilder muss also eine entsprechende Wichtung zur Sicherung gleicher Gesamthelligkeit am überlagerten Bild erfolgen.

Insbesondere zeichnet sich die Erfindung dadurch aus, dass nach der Korrektur des Lageversatzes zwischen den Einzelaufnahmen, die Pixel aller verwendeten Einzelaufnahmen in ein gemeinsames, vorzugsweise äquidistantes Punkteraster durch Resampling umgerechnet werden, wobei für jedes Zielpixel der Grauwert aus den Grauwerten der umgebenden Pixel vorzugsweise durch lineare Interpolationsverfahren oder Mittelungsverfahren berechnet wird.

Erfindungsgemäß ist des Weiteren vorgesehen, dass durch das Resampling eine höhere laterale Auflösung erreicht werden kann als bei der bisher bekannten Bestimmung von einzelnen Punkten anhand eines Einzelbildes. Durch die Einzelbildüberlagerung bzw. - überlappung, also die Verwendung von mehrfach aufgenommenen Informationen des gleichen Objektabschnittes, können diese redundanten Informationen benutzt werden, um die Messauflösung zu erhöhen. Insbesondere ist vorgesehen, dass die aus zumindest zwei Einzelaufnahmen stammenden Informationen zu zumindest einem Bereich des Bildes gemeinsam zur Bestimmung der Lage eines Merkmals in diesem Bildbereich verwendet werden, vorzugsweise durch das Einsetzen von Resampling-Verfahren, um die laterale Auflösung zu erhöhen. Hierbei wird für alle Pixelpositionen aus allen Einzel- bzw. Teilbereichen ein resultierendes Pixel bestimmt.

Hervorzuheben ist des Weiteren, dass jeweils mehrere Einzelaufnahmen direkt aufeinander folgend mit kürzerer Integrationszeit als eine Standardintegrationszeit von 20 Millisekunden aufgenommen werden.

Erfindungsgemäß werden die Einzelbilder mit kürzeren Integrationszeiten im Vergleich zu der Integrationszeit aufgenommen, in denen üblicherweise ein Bild aufgenommen wird, das ausgewertet wird. Übliche Standardintegrationszeiten können bei 20 Millisekunden liegen, um einen auswertbaren Kontrast sicherzustellen. Diesbezügliche Werte sind jedoch rein beispielhaft zu verstehen. Insbesondere ist vorgesehen, dass die Gesamtintegrationszeit der Einzelbilder kleiner als eine übliche Standardintegrationszeit ist.

Insbesondere bezieht sich die Erfindung auf ein Verfahren zur Erzeugung eines Bildes mit einem optischen Sensor wie Kamera, wobei dem Bild eine Integrationszeit T-gesamt zugeordnet wird, bei dem mehrere Einzelbilder aufgenommen mit Integrationszeiten T₁ bis Tₙ, mit T₁ bis Tₙ mit jeweils < 0,5 ms aufgenommen und die Einzelbilder überlagert werden, wobei die räumliche Lage der Einzelaufnahmen zueinander bestimmt und bei der Überlagerung berücksichtigt wird.

Das erfindungsgemäße Verfahren wird insbesondere zur Bestimmung von Objektpunkten und / oder Konturen und / oder Maßen von Messobjekten, vorzugsweise in einem Koordinatenmessgerät, eingesetzt, wobei das Koordinatenmessgerät Mittel zur Relativbewegung zwischen Messobjekt und Kamera zur Verfügung stellt.

Die Erfindung zeichnet sich auch dadurch aus, dass während der Aufnahme der zu überlagernden Einzelaufnahmen eine vorzugsweise blitzartige Beleuchtung eingeschaltet wird, wobei Einzelbildaufnahme, Beleuchtung und Aufnahme der Position der Achsen des Koordinatenmessgerätes derart synchronisiert wird, dass eine exakte Position für jede Einzelaufnahme vorliegt und gewährleistet ist, dass während der Integrationszeit jeder Einzelaufnahme die Beleuchtung eingeschaltet ist.

Höchste Messgeschwindigkeiten lassen sich erreichen, indem das erfindungsgemäße Verfahren mit den Verfahren des Bildverarbeitungsscannings oder so genannten "On-the-fly"-Technologien kombiniert wird, bei denen die Bildaufnahme während der Bewegung des Messobjektes erfolgt. Zur Reduzierung der Bewegungsunschärfe wird das fotosensitive Detektionsmittel des optischen Sensors bzw. der Kamera dabei nur kurzzeitig belichtet, z. B. durch den Einsatz einer blitzartigen Beleuchtung oder von Shuttern. Die zeitlich begrenzte Belichtung erfolgt dabei synchron zur Aufnahme der aktuellen Werkstückposition bzgl. des fotosensitiven Detektionsmittels mit Hilfe von Positionserfassungsmitteln und der Messwertaufnahme des fotosensitiven Detektionsmittels. Diese Verfahren werden u.a. in der EP-B-1 286 134 und der WO-A-03/009070 beschrieben, deren Offenbarungen Gegenstand der vorliegenden Erfindung sind.

Bevorzugterweise enthält die Kamera mehrere Pixel und ist bevorzugterweise eine CCD-oder CMOS-Kamera.

Unabhängig hiervon können als Messobjekte solche verwendet werden, die eine rotationssymmetrische und/oder zylindrische Gestalt aufweisen, insbesondere Stents sind.

Insbesondere werden zur Messung rotationssymmetrischer und/oder zylindrischer Messobjekte Dreh- und/oder Schwenkachsen eingesetzt.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines den Zeichnungen zu entnehmenden bevorzugten Ausführungsbeispiels.

Es zeigen:
- Fig. 1: ein Bild nach dem Stand der Technik, aufgenommen mit einer Standardintegrationszeit,
- Fig. 2a) - c): Einzelbilder, aufgenommen mit Intergrationszeiten, die kürzer als die Standardintergrationszeiten sind,
- Fig. 3a) - c): ein Ausrichten der Einzelbilder gemäß Fig. 2 auf ein gemeinsames Pixelraster,
- Fig. 4a) - c): die ausgerichteten Einzelbilder gemäß Fig. 3, eingegrenzt auf den gleichen Bereich,
- Fig. 5: ein durch Überlagerung der Grauwertamplituden der Bilder 4a) - c) erzeugtes Gesamtbild,
- Fig. 6: zu messender Ausschnitt eines Bauteils,
- Fig. 7: Lage der aufgenommenen Kamerabilder nach dem Stand der Technik,
- Fig. 8: Einzelbilder aus Fig. 7 und Zusammensetzung dieser,
- Fig. 9: Verteilung weiterer Kamerabilder im Bereich des zu bestimmenden Abschnitts,
- Fig. 10: Einzelbilder aus Fig. 9,
- Fig. 11: Lage der Einzelbilder aus Fig. 7 und Fig. 9,
- Fig. 12: Einzelbilder aus Fig. 11 und Überlagerung zum Gesamtbild,
- Fig. 13: eine Messanordnung mit photosensitiver Detektionseinrichtung in Prinzipdarstellung,
- Fig. 14: eine Prinzipdarstellung eines Koordinatenmessgerätes,
- Fig. 15: eine Prinzipdarstellung einer Anzeigeeinheit,
- Fig. 16: die Prinzipdarstellung des Koordinatenmessgerätes in einer zweiten Position eines Messobjektes und
- Fig. 17: eine Prinzipdarstellung eines Gesamtbildes.

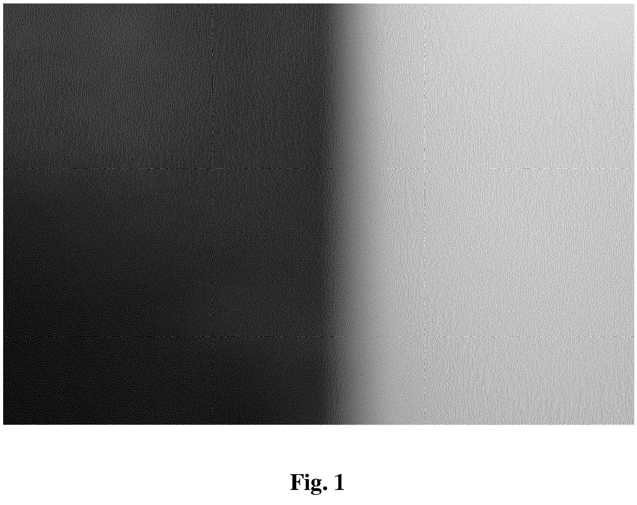

Fig. 1 zeigt ein unscharfes Bild, welches entsteht, wenn während einer relativ langen Integrationszeit (wie z. B. einer Standardintegrationszeit von 15 oder 20 Millisekunden) das Messobjekt, hier eine Objektkante, bezüglich des optischen Sensors - wie Kamera - mehr oder weniger stark bewegt wird. Dies kann durch Vibrationen des Messgerätes, aber auch gewollt aufgrund einer optischen Messung in der Bewegung ausgelöst werden. Die Bestimmung der Lage der Kante, also des Übergangs zwischen dunklem und hellem Bereich im Bild, kann nur mit geringer Genauigkeit erfolgen.

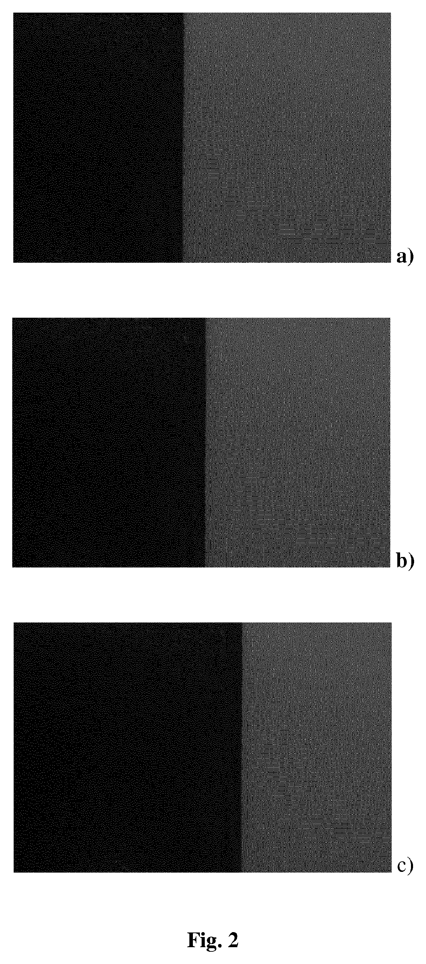

Fig. 2a) bis c) zeigen drei Aufnahmen des nahezu gleichen Abschnitts des Objektes, insbesondere der gleichen Objektkante wie in Abbildung 1, welche unmittelbar nacheinander aber mit deutlich kürzeren Integrationszeiten als 20 Millisekunden, wie beispielsweise 5 Millisekunden aufgenommen wurden. Die Aufnahmen zeigen nun eine scharfe Abbildung der Kante, jedoch aufgrund der kürzeren Integrationszeit dunklere Bilder. Aufgrund der verkleinerten Helligkeit ist eine Erkennung der Kante unter Umständen nicht möglich oder führt zu großen Messabweichungen.

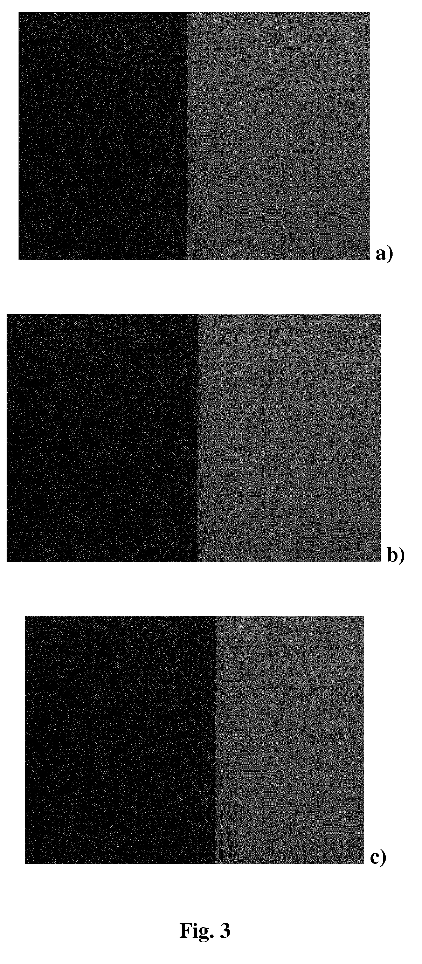

Fig. 3 zeigt das erfindungsgemäße Verschieben der Einzelbilder a) bis c) auf ein gemeinsames Pixelraster. In diesem Fall wurde die Position des Bildes der Fig. 3b) als Referenz gewählt. Fig. 3a) zeigt also das nach rechts verschobene Bild der Fig. 2a) und Fig. 3c) das nach links verschobene Bild der Fig. 2c). Die Verschiebung wurde aufgrund der den einzelnen Bildern der Fig. 2a) bis 2c) zugeordneten, durch das Koordinatenmessgerät bestimmten Position durchgeführt. Alternativ oder zusätzlich kann die Lageverschiebung zwischen den Bildern der Fig. 2a) bis 2c) auch mit Korrelationsverfahren bestimmt werden. Um im späteren Schritt die Grauwertamplituden der Pixel addieren zu können, erfolgt die Verschiebung mit Hilfe von Resampling-Verfahren auf ein exakt gleiches Pixelraster, in diesem Fall das Pixelraster des Bildes der Fig. 2b) bzw. 3b). Der dargestellte Bildbereich der Bilder der Fig. 3a) und c) wurde auf die Größe des Bildes gemäß Fig. 3b) beschränkt.

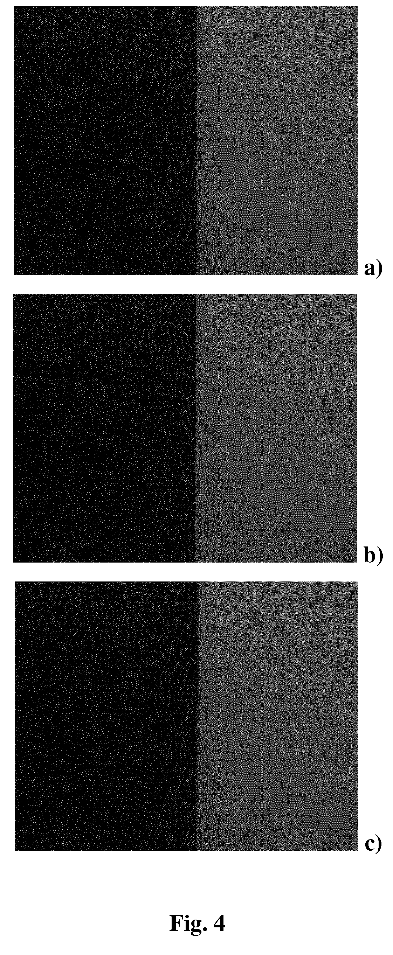

Fig. 4 zeigt die erfindungsgemäß verschobenen und zusätzlich auf den Bereich eingegrenzten Bilder, welcher in allen drei Teilbildern der Fig. 2a) bis c) bzw. 3a) bis c) enthalten ist.

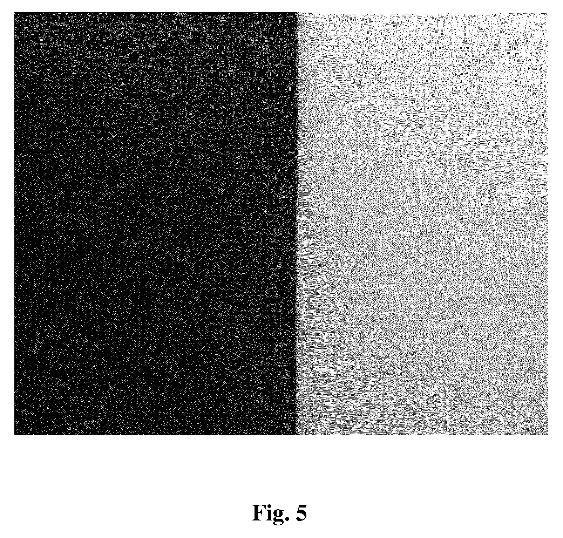

In Fig. 5 kann nun im letzten Schritt die Überlagerung der Grauwertamplituden der jeweiligen Pixel der Fig. 4a) bis 4c) erfolgen und es ergibt sich eine scharfe Abbildung des Objektes bzw. der Objektkante. An dieser kann nun eine Kantenerkennung oder alternativ eine Helligkeits- oder Kontrastauswertung bei Autofokusverfahren, mit sehr hoher Genauigkeit erfolgen, da die mittlere Helligkeit des Bildes in Figur 5 der Summenhelligkeit der drei Einzelbilder entspricht, in diesem Fall also äquivalent zu einem Bild ist, welches mit einer Integrationszeit von 15 Millisekunden aufgenommen wurde, jedoch eine Bildunschärfe nicht aufweist, die nach dem Stand der Technik bei einer Relativbewegung zwischen Objekt und Sensor bei Standardintegrationszeit auftritt.

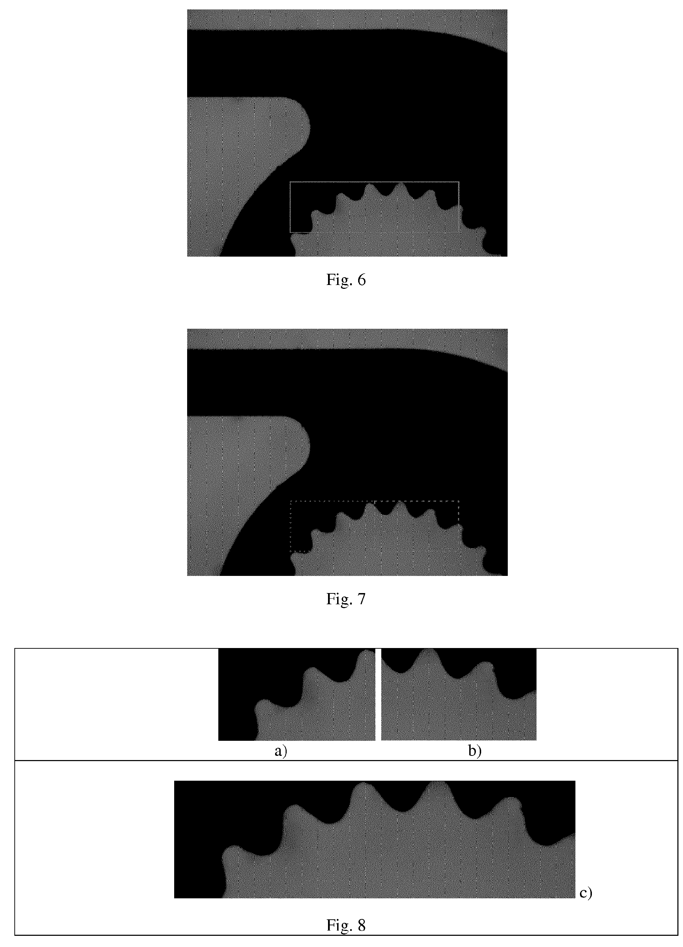

Analog zum in den Fig. 1 bis 5 beschriebenen Verfahren der Messung mit kürzeren Integrationszeiten und Überlagerung zur Verringerung des Rauschens, wird in den Fig. 6 bis 12 ein Verfahren näher erläutert, bei dem sich die zum Gesamtbild zusammenzusetzenden Einzelaufnahmen nur teilweise oder gar nicht überlagern.

Fig. 6 zeigt hierzu ein Bauteil, dass im Bereich des durch das helle Kästchen gekennzeichneten Abschnitts optisch erfasst werden soll.

Fig. 7 zeigt, wie dies nach dem Stand der Technik beispielsweise mit zwei einzelnen Aufnahmen erfolgt, gekennzeichnet durch ein Rechteck mit gepunkteten Linien fürdie erste Aufnahme und einem Rechteck mit gestrichelten Linien für die zweite Aufnahme. Diese beiden Einzelbilder sind in den Fig. 8a und b dargestellt. Beim Zusammenfügen zu einem Gesamtbild entsteht das in Fig. 8c dargestellte Bild. Da die aus Fig. 8a und b bereitgestellten Einzelaufnahmen bereits mit einer geringeren Integrationszeit aufgenommen wurden, ist das sich ergebende Bild gemäß Fig. 8c relativ dunkel.

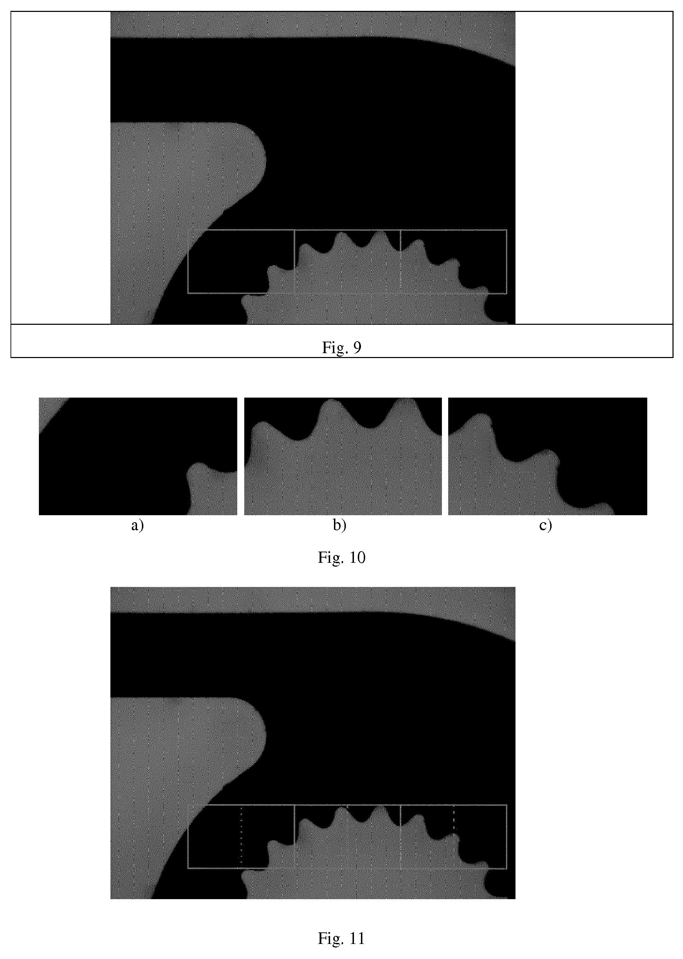

Fig. 9 zeigt, gekennzeichnet durch drei weiße Rechtecke, an welchen Teilbereichen im Bild zusätzliche Bilder aufgenommen werden. Die aufgenommenen Einzelbilder sind in der Fig. 10a, b und c dargestellt.

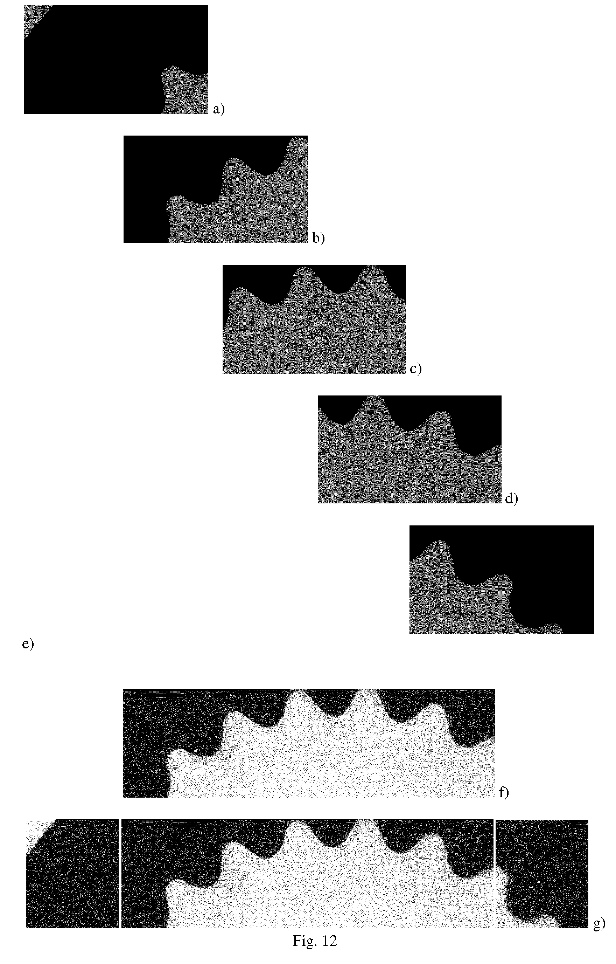

Fig. 11 zeigt die in diesem Beispiel 5 insgesamt aufgenommenen Teilbilder, gekennzeichnet durch die drei Rechtecke und die beiden gepunkteten bzw. gestrichelten Rechtecke. Hierbei ist zu erkennen, dass sich die Einzelaufnahmen jeweils zu 50 % überlagern. Die sich ergebenden Einzelaufnahmen sind in Fig. 12a bis 12e dargestellt. Die Überlappung zwischen den Bildern a und b, b und c, c und d, d und e beträgt jeweils etwa 50 %. Werden die Grauwertamplituden der Überlagerungsbereiche addiert, ergibt sich für die Bereiche, in denen eine Überlagerung vorliegt, das in Fig. 12f dargestellte Gesamtbild. Die linke Hälfte in Fig. 12a und die rechte Hälfte des in Fig. 12e dargestellten Einzelbildes wurden zur Auswertung nicht herangezogen, da hier keine Überlagerung vorliegt. Alternativ hierzu kann eine Normierung bzw. Skalierung, in diesem Fall eine Verdopplung der Grauwertamplituden in diesen fehlenden Bereichen vorgenommen und auch diese zum Gesamtbild hinzugezogen werden.

Dieses Gesamtbild ist in Figur 12g dargestellt. Es ist erkennbar, dass die Bereiche, die aus der linken Hälfte aus Figur 12a und der rechten Hälfte aus Figur 12e stammen, ein höheres Rauschniveau besitzen.

Die gleiche Vorgehensweise ist auch möglich, wenn die Bauteiloberfläche gekrümmt ist. Hierzu werden die Einzelaufnahmen beispielsweise in verschiedenen Drehstellungen des Bauteils ermittelt. Werden die Bereiche im Bild entsprechend der vorliegenden Krümmung anschließend entzerrt, entsteht bei der Überlagerung der Einzelaufnahmen, ein durch Resampling äquidistantes Punkteraster, vorzugsweise für eine abgewickelte Darstellung der Mantelfläche eines beispielsweise zylindrischen Bauteils.

Das in den Fig. 6 bis 12 dargestellte Verfahren ist ebenso bei Überlappungsgraden größer aber auch kleiner als 50 % möglich. Hierzu werden pro Objektbereich entweder mehrere Bilder überlagert, deren Grauwertamplituden addiert werden oder es erfolgt keine Überlagerung und eine entsprechende Skalierung der Grauwerte.

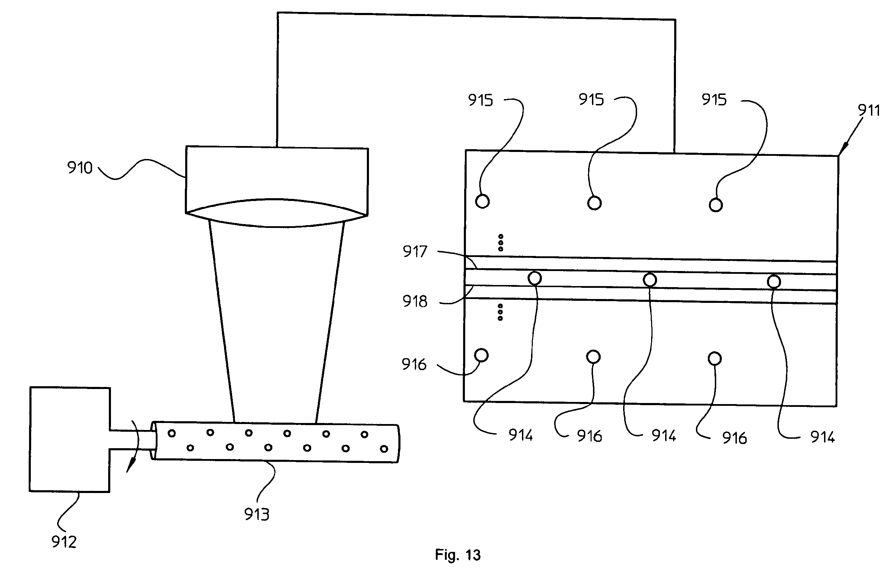

Figur 13 zeigt einen auch als optisches Abbildungssystem 910 bezeichneten optischen Sensor, zuvor auch Kamera genannt, welches mit einer matrixförmigen photosensitiven Detektionseinrichtung 911 verbunden ist und zur Messung eines an einer Drehachse 912 angebrachten rotationsförmigen Messobjektes 913 eingesetzt wird. Auf Grund der Oberflächenkrümmung des Messobjektes 913 werden auf der Detektionseinrichtung 911 jeweils nur ein Teil der Merkmale des Messobjektes 913 scharf dargestellt. Abhängig von der Schärfentiefe des optischen Abbildungssystems 910 werden beispielsweise nur die Merkmale 914 in einer definierten Drehstellung scharf abgebildet. Die Merkmale 915 werden daher beispielsweise in einem Drehschritt früher und die Merkmale 916 in einem Drehschritt später scharf abgebildet. Da im Ausführungsbeispiel die Merkmale 914 scharf abgebildet und damit diese ordnungsgemäß ausgewertet werden können, ist es ausreichend, den Bereich der Detektionseinrichtung 911 zwischen den Zeilen 917 und 918 der Detektionseinrichtung 911 auszuwerten und an eine Auswerteeinrichtung zu übermitteln. Hierdurch sind wiederum deutlich höhere Wiederholraten der Detektionseinrichtung erreichbar.

In diesem Beispiel kann davon ausgegangen werden, dass der scharf abgebildete Teil des Messobjektes 913, einen entsprechenden Rundlauf des Messobjektes vorausgesetzt, im Bildbereich der fotosensitiven Detektionseinrichtung 911 ortfest verbleibt. Daher ist es sinnvoll, während der Programmierung des Messablaufs eine feste Position des Messfensters zu definieren.

Auch bei diesen Messverfahren des rotationsförmigen Messobjekts 913 werden entsprechend der erfindungsgemäßen Lehre Einzelbilder derart aufgenommen, dass Einzelbilder sich zumindest teilweise überlappen, um bei einer Auswertung den überlappenden Bereich zu nutzen.

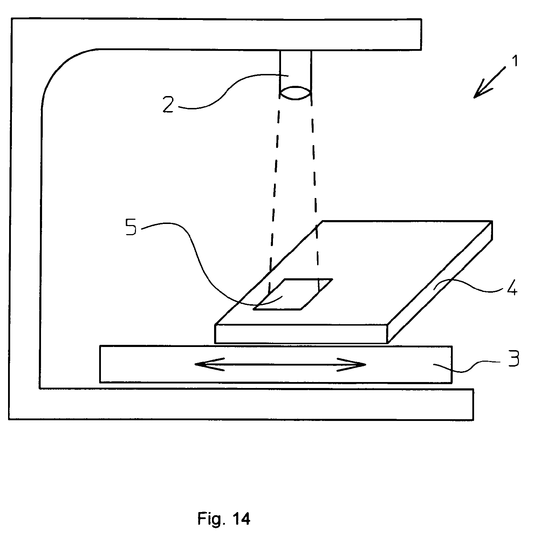

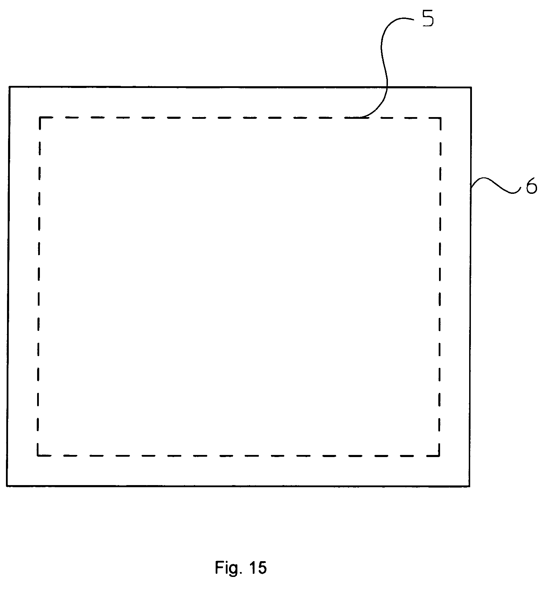

Fig. 14 zeigt rein prinzipiell ein Koordinatenmessgerät 1 mit Bildverarbeitungssensor 2 wie Kamera, insbesondere CCD- oder CMOS-Kamera, und manueller Positionierachse 3 sowie ein Messobjekt 4 in einer ersten Position. Das Bezugszeichen 5 bezeichnet den vom Bildverarbeitungssensor 2 erfassten Bereich des Messobjektes 4 in dieser Stellung. Dieser wird auf der in Fig. 15 gezeigten Anzeigeeinheit 6 zunächst in voller Bildschirmgröße dargestellt.

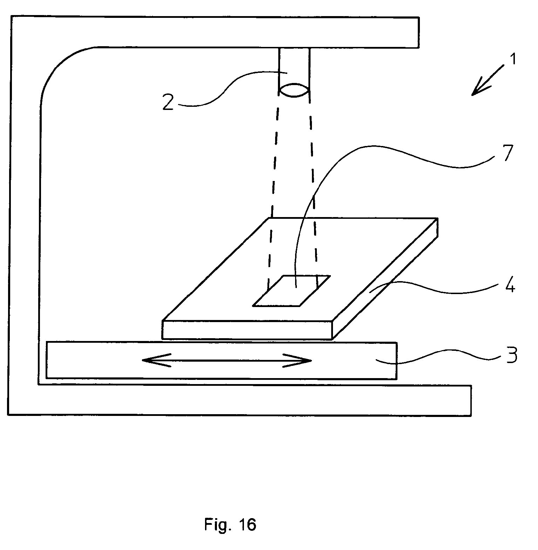

Fig. 16 zeigt das Koordinatenmessgerät aus Fig. 14 in einer zweiten Position des Messobjektes 4. Diese Position wurde eingenommen, indem der Bediener die manuellen Antriebe der Positionierachse 3 betätigt hat. Nun wird der Bereich 7 des Messobjektes durch den Bildverarbeitungssensor 2 erfasst. Anhand der geänderten Messobjektposition, angezeigt durch die Veränderung der durch die Maßstabssysteme der Positionierachse 3 bestimmten Position, wird erkannt, dass ein noch nicht erfasster Bereich 7 des Messobjektes 4 vom Bildverarbeitungssensor 2 erfasst wird und das aufgenommene Einzelbild ausgewählt und mit dem bereits ausgewählten Einzelbild des Bereiches 5 mit Hilfe von Resamplingverfahren zu einem Gesamtbild 8 zusammengesetzt wird.

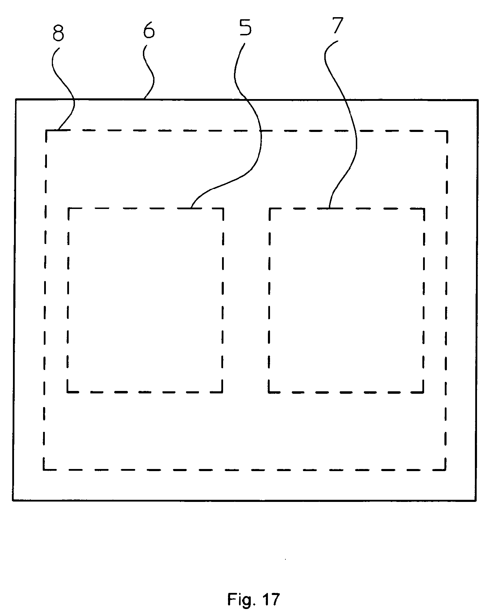

Fig. 17 zeigt die Darstellung des Gesamtbildes 8 aus den Bereichen 5 und 7 des Messobjektes auf der Anzeigeeinheit 6. Die Darstellung erfolgt skaliert, damit alle aufgenommenen Bereiche sichtbar sind.

Zunächst besteht das Gesamtbild nur aus den Bereichen 5 und 7, da weitere Informationen zum Bereich des Gesamtbildes 8 nicht vorliegen.

Erfindungsgemäß werden alternativ fortlaufend Bilder mit dem Bildverarbeitungssensor 2 aufgenommen, also auch an den Positionen zwischen der ersten Position der Fig. 14 und der zweiten Position der Fig. 16, insbesondere während der Bewegung der Positionierachse 3. Die aufgenommenen Bilder werden entsprechend ihrer Positionen überlagert und füllen das Gesamtbild 8 Stück für Stück. Höchste Bildschärfe für die während der Bewegung aufgenommenen Bilder wird erreicht, indem die Kamera des Bildverarbeitungssensors nur kurz belichtet wird und die erforderliche Helligkeit durch die erfindungsgemäße Überlagerung der Teilbilder erzielt wird.

## Patentansprüche

1. Verfahren zur Erzeugung und Auswertung eines Bildes von zumindest einem Abschnitt eines Messobjekts in einem Koordinatenmessgerät mit einer mehrere Pixel enthaltenden Kamera, insbesondere CCD- oder CMOS-Kamera, wobei das Koordinatenmessgerät eingesetzt wird, das Mittel zur Relativbewegung zwischen dem Messobjekt und der Kamera zur Verfügung stellt und in das die Kamera integriert ist,
**dadurch gekennzeichnet,**
**dass** von dem zumindest einen Abschnitt Einzelbilder mit der Kamera in Lageabweichung zueinander derart aufgenommen werden, dass zumindest einige Einzelbilder sich jeweils derart teilweise überlappen, dass zur Erzeugung des Bilds die Einzelbilder oder Signale dieser in Bezug auf den zumindest einen Abschnitt zueinander ausgerichtet und zu einem Gesamtbild als das Bild des zumindest einen Abschnitts überlagert werden, das größer als ein Einzelbild ist, wobei räumliche Lage der Einzelaufnahmen zueinander unter Zuhilfenahme der zu jeder Einzelaufnahme bestimmten Kameraposition ermittelt wird, und die Relativpositionen zwischen Messobjekt und Kamera aus den Achspositionen des Koordinatenmessgerätes bestimmt werden und die Einzelbilder unter Berücksichtigung dieser Relativpositionen zueinander verschoben und zu dem Gesamtbild überlagert werden, dass die Auswertung des Gesamtbildes im Wesentlichen auf die überlappenden Bereiche der Einzelbilder beschränkt wird und/oder die Auswertung des Gesamtbildes oder eines Teils von diesem unter Zugrundelegung der überlappenden Bereiche der diese aufweisenden Einzelbilder erfolgt, dass die Grauwerte der überlappenden Bereiche zur Bildung des Gesamtbildes addiert werden, und dass aus dem Bild Objektpunkte und/oder Konturen und/oder Maße des Messobjektes bestimmt werden.

2. Verfahren nach Anspruch 1,
**dadurch gekennzeichnet,**
**dass** von mehreren Abschnitten des Objekts Einzelbilder aufgenommen werden, von denen sich zumindest einige überlappen.

3. Verfahren nach zumindest einem der vorhergehenden Ansprüche,
**dadurch gekennzeichnet,**
**dass** dem Bild eine Integrationszeit T_{gesamt} zugeordnet wird, dass n Einzelbilder mit Integrationszeiten T₁ ,..., Tₙ mit T₁, ..., Tₙ jeweils < 5 ms aufgenommen und die Einzelbilder überlagert werden, wobei die räumliche Lage der Einzelaufnahmen zueinander bestimmt und bei der Überlagerung berücksichtigt wird.

4. Verfahren nach zumindest einem der vorliegenden Ansprüche,
**dadurch gekennzeichnet,**
**dass** der Überlappungsbereich der Abschnitte kleiner als 100 % beträgt, insbesondere zwischen 100 % und 10 %, vorzugsweise zwischen 100 % und 50 % liegt.

5. Verfahren nach zumindest einem der vorhergehenden Ansprüche,
**dadurch gekennzeichnet,**
**dass** die Einzelbilder in verschiedenen Drehstellungen des Objektes aufgenommen werden, und als Messobjekte solche verwendet werden, die eine rotationssymmetrische und/oder zylindrische Gestalt aufweisen, insbesondere Stents sind, wobei die räumliche Lage der Einzelaufnahmen zueinander unter Zuhilfenahme der Drehlage des Bauteils ermittelt wird und vorzugsweise die Einzelbilder aufgrund der Krümmung des Objektes entzerrt werden.

6. Verfahren nach zumindest einem der vorhergehenden Ansprüche,
**dadurch gekennzeichnet,**
**dass** die Überlagerung durch Addition der Intensitäten beziehungsweise Grauwerte der Pixel der Einzelaufnahmen erfolgt, und/oder dass die Überlagerung durch Mittelung der Intensitäten bzw. Grauwerte der positionsmäßig einander entsprechenden Pixel der Einzelaufnahme erfolgt und vorzugsweise die sich ergebenden Grauwerte gespreizt werden, vorzugsweise durch Division, vorzugsweise mit einem Faktor, welcher der maximal für ein Pixel zur Überlagerung herangezogenen Anzahl von Grauwerten im Gesamtbild entspricht.

7. Verfahren nach zumindest einem der vorhergehenden Ansprüche,
**dadurch gekennzeichnet,**
**dass** vor der Überlagerung der räumliche Lageversatz zwischen den Einzelaufnahmen durch Verschiebung und/oder Drehung, zumindest in der Bildebene der Einzelaufnahmen, korrigiert wird, wobei nach der Korrektur des Lageversatzes zwischen den Einzelaufnahmen die Pixel aller verwendeten Einzelaufnahmen in ein gemeinsames, vorzugsweise äquidistantes Punkteraster durch Resampling umgerechnet werden, wobei für jedes Zielpixel der Grauwert aus den Grauwerten der umgebenden Pixel vorzugsweise durch lineare Interpolationsverfahren oder Mittelungsverfahren berechnet wird.

8. Verfahren nach zumindest einem der vorhergehenden Ansprüche,
**dadurch gekennzeichnet,**
**dass** die Bereiche im Gesamtbild unberücksichtigt bleiben, die nach der Überlagerung einen Grauwert unterhalb eines Schwellwertes besitzen, wobei der Schwellwert vorzugsweise 20 %, besonders bevorzugte 10 % des maximalen Grauwertes beträgt, und/oder dass bei der Überlagerung eine Wichtung der Bereiche erfolgt, in denen zumindest eines der für die Überlagerung herangezogenen Einzelbilder im Randbereich des Bildes vorliegt.

9. Verfahren nach zumindest einem der vorhergehenden Ansprüche,
**dadurch gekennzeichnet,**
**dass** die aus zumindest zwei Einzelaufnahmen stammenden Informationen zu zumindest einem Bereich des Bildes gemeinsam zur Bestimmung der Lage eines Merkmals in diesem Bildbereich verwendet werden, vorzugsweise durch das Einsetzen von Resampling-Verfahren, angewendet auf die unterschiedlichen Pixelpositionen aller Einzelaufnahmen.

10. Verfahren nach zumindest einem der vorhergehenden Ansprüche,
**dadurch gekennzeichnet,**
**dass** jeweils mehrere Einzelaufnahmen direkt aufeinanderfolgend mit kürzerer Integrationszeit T als eine Standardintegrationszeit von 20 Millisekunden aufgenommen werden.

11. Verfahren nach zumindest einem der vorhergehenden Ansprüche,
**dadurch gekennzeichnet,**
**dass** während der Aufnahme der zu überlagernden Einzelaufnahmen eine vorzugsweise blitzartige Beleuchtung eingeschaltet wird, wobei Einzelbildaufnahme, Beleuchtung und Aufnahme der Position der Achsen des Koordinatenmessgerätes derart synchronisiert wird, dass eine exakte Position für jede Einzelaufnahme vorliegt und gewährleistet ist, dass während der Integrationszeit jeder Einzelaufnahme die Beleuchtung eingeschaltet ist.

12. Verfahren nach zumindest einem der vorhergehenden Ansprüche,
**dadurch gekennzeichnet,**
**dass** wahlweise gesamte Fläche oder ein Teilbereich oder mehrere Teilbereiche der Detektionsfläche des optischen Sensors genutzt werden, vorzugsweise eine eingeschränkte Anzahl von Zeilen.

13. Verfahren nach zumindest einem der vorhergehenden Ansprüche,
**dadurch gekennzeichnet"**
dass zur Messung rotationssymmetrischer und/oder zylindrischer Messobjekte Dreh- und/oder Schwenkachsen eingesetzt werden.

## Claims

1. Method for generating and evaluating an image of at least one section of a measurement object in a coordinate measurement apparatus with a multi-pixel camera, in particular a CCD or CMOS camera, wherein the coordinate measurement apparatus is used which provides means for the relative movement between the measurement object and the camera and in which the camera is integrated,
**characterized in that**
of the at least one section, individual images which are deviating in position to one another are recorded with the camera in such manner that at least several individual images in each case at least partially overlap in such manner that for generating the image, the individual images or signals thereof are aligned to one another with respect to the at least one section and superposed to form an overall image as the image of the at least one section, which is larger than one individual image, wherein the spatial position of the individual recordings with respect to one another is determined with the aid of the camera position determined for each individual recording, and the relative positions between measurement object and camera are determined from the axle positions of the coordinate measurement apparatus and the individual images are offset and superposed to form the overall image, taking into consideration such relative positions with respect to one another, that the evaluation of the overall image is substantially limited to the overlapping regions of the individual images and/or the evaluation of the overall image or of a portion thereof occurs on the basis of the overlapping regions of the individual images comprising said regions, that the gray values of the overlapping areas are added to form an overall image, and that object points and/or contours and/or dimensions of the measurement object are determined from the image.

2. Method according to claim 1,
**characterized in that**
individual images of several sections of the object are recorded, of which at least a few images overlap.

3. Method according to at least one of the preceding claims,
**characterized in that**
an integration time Tₜₒₜₐₗ is assigned to the image, **in that** n individual images with integration times T₁, ..., Tₙ are recorded, where T₁, ..., Tₙ in each case < 5 ms, and the individual images are superposed, wherein the spatial position of the individual images with respect to one another is determined and taken into consideration in the superposition.

4. Method according to at least one of the preceding claims,
**characterized in that**
the overlapping region of the sections is less than 100%, in particular it is between 100% and 10%, preferably between 100% and 50%.

5. Method according to at least one of the preceding claims,
**characterized in that**
the individual images are recorded in different positions of rotation of the object and as measurement objects, objects are used which have a rotation symmetrical and/or cylindrical shape, in particular stents, wherein the spatial position of the individual recordings with respect to one another is determined with the aid of the rotation position of the component, and the individual images are preferably rectified on the basis of the curvature of the object.

6. Method according to at least one of the preceding claims,
**characterized in that**
the superposition occurs by the addition of the intensities or gray values of the pixels of the individual recordings, and/or
that the superposition occurs by averaging the intensities or gray values of the pixels of the individual recordings, which correspond to one another in terms of position, and the resulting gray values are preferably spread, preferably by division, preferably with a factor which corresponds at most for one pixel to the number of gray values in the overall image that is utilized for the superposition.

7. Method according to at least one of the preceding claims,
**characterized in that**
before the superposition, the spatial position offset between the individual recordings is corrected by shifting and/or rotating, at least in the image plane of the individual recordings, wherein after the correction of the position offset between the individual recordings, the pixels of all the used individual recordings are converted into a common, preferably equidistant point grid by resampling, wherein, for each target pixel, the gray value is calculated from the gray values of the surrounding pixels, preferably by linear interpolation methods or averaging methods.

8. Method according to at least one of the preceding claims,
**characterized in that**
the regions in the overall image which, after the superposition, have a gray value under the threshold value, wherein the threshold value is preferably 20%, particularly preferably 10% of the maximum gray value, remain not taken into consideration and/or that in the superposition, a weighting of the regions occurs, in which at least one of the individual images used for the superposition is located in the marginal region of the image.

9. Method according to at least one of the preceding claims,
**characterized in that**
the data originating from at least two individual recordings on at least one region of the image are used together for the determination of the position of a feature in this image region, preferably by using resampling methods, which is applied to the different pixel positions of all the individual recordings.

10. Method according to at least one of the preceding claims,
**characterized in that**
in each case several individual recordings are recorded immediately after one another with shorter integration time T than a standard integration time of 20 milliseconds.

11. Method according to at least one of the preceding claims,
**characterized in that**
during the recording of the individual recordings to be superposed, a preferably flash-like illumination is switched on, wherein the individual image recording, the illumination and the recording of the position of the axes of the coordinate measurement apparatus are synchronized in such a manner that an exact position for each individual recording is present, and that it is guaranteed that the illumination is switched on during the integration time of each individual recording

12. Method according to at least one of the preceding claims,
**characterized in that**
as desired, the entire region or a partial region or several partial regions of the detection surface of the optical sensor is/are used, preferably a limited number of rows.

13. Method according to at least one of the preceding claims,
**characterized in that**
rotation and/or swivel axles are used for the measurement of rotation symmetrical and/or cylindrical measurement objects

## Revendications

1. Procédé pour produire et évaluer une image d'au moins une partie d'un objet de mesure dans un appareil de mesure de coordonnées avec une caméra comprenant plusieurs pixels, en particulier une caméra CCD ou CMOS, sachant que l'appareil de mesure de coordonnées est mis en oeuvre, lequel met à disposition des moyens de mouvement relatif entre l'objet de mesure et la caméra et dans lequel est intégrée la caméra,
**caractérisé en ce**
**que** de ladite au moins une partie d'objet sont prises avec la caméra des images isolées avec écart de position les unes par rapport aux autres de telle manière qu'au moins certaines images isolées se chevauchent respectivement partiellement, de sorte que pour produire l'image, les images isolées ou des signaux desdites images isolées sont orienté(e)s les un(e)s par rapport aux autres relativement à l'au moins une partie d'objet et sont superposé(e)s en une image globale en tant qu'image de l'au moins une partie d'objet, ladite image globale étant plus grande qu'une image isolée, sachant que la position spatiale des prises de vues isolées les unes par rapport aux autres est déterminée à l'aide de la position de la caméra définie pour chaque prise de vue isolée, et que les positions relatives entre objet de mesure et caméra sont déterminées à partir des positions des axes de l'appareil de mesure de coordonnées et les images isolées sont déplacées les unes vers les autres en tenant compte desdites positions relatives et sont superposées pour former l'image globale, que l'évaluation de l'image globale est essentiellement limitée aux zones en chevauchement des images isolées et/ou que l'évaluation de l'image globale ou d'une partie de cette dernière s'effectue sur la base des zones en chevauchement desdites images isolées contenant ces zones, que les valeurs de gris des zones en chevauchement sont additionnées pour former l'image globale, et qu'à partir de l'image sont déterminés des points d'objet et/ou des contours et/ou des dimensions de l'objet de mesure.

2. Procédé selon la revendication 1,
**caractérisé en ce**
**que** de plusieurs parties de l'objet sont prises des images isolées dont au moins quelques-unes se chevauchent.

3. Procédé selon au moins l'une des revendications précédentes,
**caractérisé en ce**
**qu'**un temps d'intégration T_{global} est associé à l'image, que n images isolées sont prises avec des temps d'intégration T₁ ,..., Tₙ tels que T₁ ,..., Tₙ respectivement < 5 ms, et que les images isolées sont superposées, sachant que la position spatiale des prises de vues isolées les unes par rapport aux autres est déterminée et prise en compte lors de la superposition.

4. Procédé selon au moins l'une des revendications précédentes,
**caractérisé en ce**
**que** la zone de chevauchement des parties a une étendue inférieure à 100 %, en particulier comprise entre 100 % et 10 %, de préférence entre 100 % et 50 %.

5. Procédé selon au moins l'une des revendications précédentes,
**caractérisé en ce**
**que** les images isolées sont prises dans différentes positions de rotation de l'objet et que sont utilisés des objets de mesure qui présentent une forme à symétrie de révolution et/ou cylindrique, en particulier des stents, sachant que la position spatiale des prises de vues isolées les unes par rapport aux autres est déterminée à l'aide de la position de rotation du composant, et que de préférence les images isolées sont égalisées en fonction de la courbure de l'objet.

6. Procédé selon au moins l'une des revendications précédentes,
**caractérisé en ce**
**que** la superposition s'effectue par addition des intensités et/ou des valeurs de gris des pixels des prises de vues isolées, et/ou que la superposition s'effectue par formation de la moyenne des intensités et/ou des valeurs de gris des pixels des prises de vues isolées dont les positions respectives correspondent, et que de préférence les valeurs de gris obtenues sont étalées, de préférence par division, de préférence avec un facteur correspondant au nombre maximum de valeurs de gris pris pour la superposition d'un pixel dans l'image globale.

7. Procédé selon au moins l'une des revendications précédentes,
**caractérisé en ce**
**qu'**avant la superposition, le décalage de position spatial entre les prises de vues isolées est corrigé par translation et/ou rotation, au moins dans le plan d'image des prises de vues isolées, sachant qu'après la correction du décalage de position entre les prises de vues isolées, les pixels de toutes les prises de vues isolées utilisées sont recalculés par rééchantillonnage dans une trame de points commune, de préférence équidistante, sachant que pour chaque pixel cible, la valeur de gris est calculée à partir des valeurs de gris des pixels environnants, de préférence par interpolation linéaire ou par formation de la moyenne.

8. Procédé selon au moins l'une des revendications précédentes,
**caractérisé en ce**
**que** dans l'image globale ne sont pas prises en compte les zones qui, après la superposition, possèdent une valeur de gris inférieure à une valeur seuil, sachant que ladite valeur seuil est de préférence égale à 20 %, particulièrement de préférence égale à 10 % de la valeur de gris maximale, et/ou que lors de la superposition est effectuée une pondération des zones dans lesquelles au moins une des images isolées utilisées pour la superposition se trouve dans la zone marginale de l'image.

9. Procédé selon au moins l'une des revendications précédentes,
**caractérisé en ce**
**que** les informations provenant d'au moins deux prises de vues isolées portant sur au moins une zone de l'image sont utilisées ensemble pour déterminer la position d'une caractéristique dans ladite zone d'image, de préférence par la mise en oeuvre d'un procédé de rééchantillonnage, appliqué aux différentes positions de pixels de toutes les prises de vues isolées.

10. Procédé selon au moins l'une des revendications précédentes,
**caractérisé en ce**
**que** plusieurs prises de vues isolées sont respectivement effectuées directement consécutivement avec un temps d'intégration T plus court qu'un temps d'intégration standard de 20 millisecondes.

11. Procédé selon au moins l'une des revendications précédentes,
**caractérisé en ce**
**que** pendant l'acquisition des prises de vues isolées devant être superposées est activé un éclairage de préférence sous forme de flash, sachant que la prise de l'image isolée, l'éclairage et l'enregistrement de la position des axes de l'appareil de mesure de coordonnées sont synchronisés de sorte à obtenir et à garantir une position précise pour chaque prise de vue isolée, et que l'éclairage est activé pendant le temps d'intégration de chaque prise de vue isolée.

12. Procédé selon au moins l'une des revendications précédentes,
**caractérisé en ce**
**qu'**au choix la surface totale ou une zone partielle ou plusieurs zones partielles de la surface de détection du capteur optique est/sont utilisée(s), de préférence un nombre limité de lignes.

13. Procédé selon au moins l'une des revendications précédentes,
**caractérisé en ce**
**que** pour mesurer un objet de mesure à symétrie de révolution et/ou cylindrique, des axes de rotation et/ou de pivotement sont mis en oeuvre.
